# EUROPEAN PATENT SPECIFICATION

(11) **EP 3 466 604 B1**
(45) Date of publication and mention of the grant of the patent: **23.12.2020**
(21) Application number: 16904014.4
(22) Date of filing: 01.06.2016
(51) Int. Cl.: B23P 19/00, G06T 1/00, G06T 7/70

(54) **IMAGE PROCESSING DEVICE, WORKPIECE TRANSFER DEVICE, AND IMAGE PROCESSING METHOD**
BILDVERARBEITUNGSVORRICHTUNG, ARBEITSTEILÜBERTRAGUNGSVORRICHTUNG UND BILDVERARBEITUNGSVERFAHREN
DISPOSITIF DE TRAITEMENT D'IMAGE, DISPOSITIF DE TRANSFERT DE PIÈCE, ET PROCÉDÉ DE TRAITEMENT D'IMAGE

(43) Date of publication of application: 10.04.2019
(73) Proprietor: Fuji Corporation, Chiryu-shi, Aichi 472-8686 (JP)
(72) Inventor: OISHI, Nobuo, Chiryu, Aichi (JP)
(74) Representative: Grünecker Patent- und Rechtsanwälte PartG mbB
(86) International application number: PCT/JP2016/066180
(87) International publication number: WO 2017/208389

(56) References cited:
- JP-A- H08 271 223
- JP-A- H08 271 223
- JP-A- H11 312 898
- JP-A- 2003 279 334
- JP-A- 2014 006 852
- JP-A- 2014 006 852
- US-A- 4 402 053
- OHBA K ET AL: "Visual learning and object verification with illumination invariance", INTELLIGENT ROBOTS AND SYSTEMS, 1997. IROS '97., PROCEEDINGS OF THE 19 97 IEEE/RSJ INTERNATIONAL CONFERENCE ON GRENOBLE, FRANCE 7-11 SEPT. 1997, NEW YORK, NY, USA,IEEE, US, vol. 2, 7 September 1997 (1997-09-07), pages 1044-1050, XP010264772, DOI: 10.1109/IROS.1997.655139 ISBN: 978-0-7803-4119-7
- Anonymous: "HSL and HSV - Wikipedia", , 25 May 2016 (2016-05-25), XP055567253, Retrieved from the Internet: URL:https://en.wikipedia.org/w/index.php?t itle=HSL_and_HSV&oldid=722072094 [retrieved on 2019-03-11]

## Description

### Technical Field

The present invention relates to an image processing device, a work transfer device, and an image processing method.

### Background Art

Conventionally, as a work transfer device, there is, for example, a device with a camera attached nearby to a robot hand that moves a workpiece by gripping the workpiece with a pair of gripping claws that are capable of opening and closing, that measures the position of a workpiece arranged on a tray by processing an image captured by the camera, and performs a gripping operation using the pair of gripping claws at the measured position. Such a device can grip a workpiece reliably even when there is some positional error. Patent literature 2 and 3 discloses the preamble of the independent claims.

### Citation List

### Patent Literature

Patent literature 1: JP-A-2013-43231
Patent literature 2: JP 2014 006852 A
Patent literature 3: *"*Visual learning and object verification with illumination invariance" by Ohba K. et al., 1997

### Summary of Invention

### Technical Problem

However, with a device disclosed in patent literature 1, for example, in cases in which the workpiece is an item that reflects light, such as metal, is white or black, or has a variable color, or in cases in which the three-dimensional shape of the workpiece is variable, or there is a portion in shadow or a portion that reflects lights, it may be difficult to determine the position of the workpiece from the captured image. With such a device, it is troublesome to change the color of a loading stable on which the workpiece is loaded in accordance with variations in the workpiece. Also, with such a device, if a light source that emits light over the entire workpiece such that there are no shadows is provided near to the workpiece, it becomes difficult to pick up the workpiece.

The present invention takes account of such circumstances and an object thereof is to provide an image processing device, a work transfer device, and an image processing method capably of reliably gripping a position of a workpiece while being versatile.

### Solution to Problem

The present invention is defined in the independent claims. Preferred embodiments are laid down in the dependent claims.

An image processing device of the present invention is defined in claim 1.

The image processing device detects a work region using a color difference signal from among a brightness-color difference signal obtained from a signal output by an imaging section that captures a color image, determines whether the workpiece of the detected work region can be picked up, and outputs a determining result. With an image processing device, for example, assuming that the work region is detected using a brightness signal, for example, for a workpiece with a shiny metal finish, halation may occur, causing shadow regions, meaning that the work region cannot be identified accurately. However, with this imaging device, because the work region is detected using a color difference signal, the color difference level between the background (pickup loading section) and the workpiece is clearer, meaning that the extracted outline is more stable. With this device, for example, it is possible to mitigate variations in the background and the lighting, and the position of a workpiece is determined more reliably while maintaining versatility. Also, with a work transfer device that has acquired the determining result, it is possible to pick up work more reliably based on the more reliable workpiece position.

### Brief Description of Drawings

FIG. 1
   A schematic diagram of work transfer system 10.
FIG. 2
   A schematic diagram of work transfer device 20.
FIG. 3
   A diagram showing complementary color relationships.
FIG. 4
   A schematic diagram of image processing device 50.
FIG. 5
   A diagram of a work transfer process performed by work transfer device 20.
FIG. 6
   A flowchart showing an example of an image processing routine.
FIG. 7
   A diagram of pickup loading section 13 and a captured image 60.
FIG. 8
   A diagram of the captured image, a brightness signal, and a color difference signal.

### Description of Embodiments

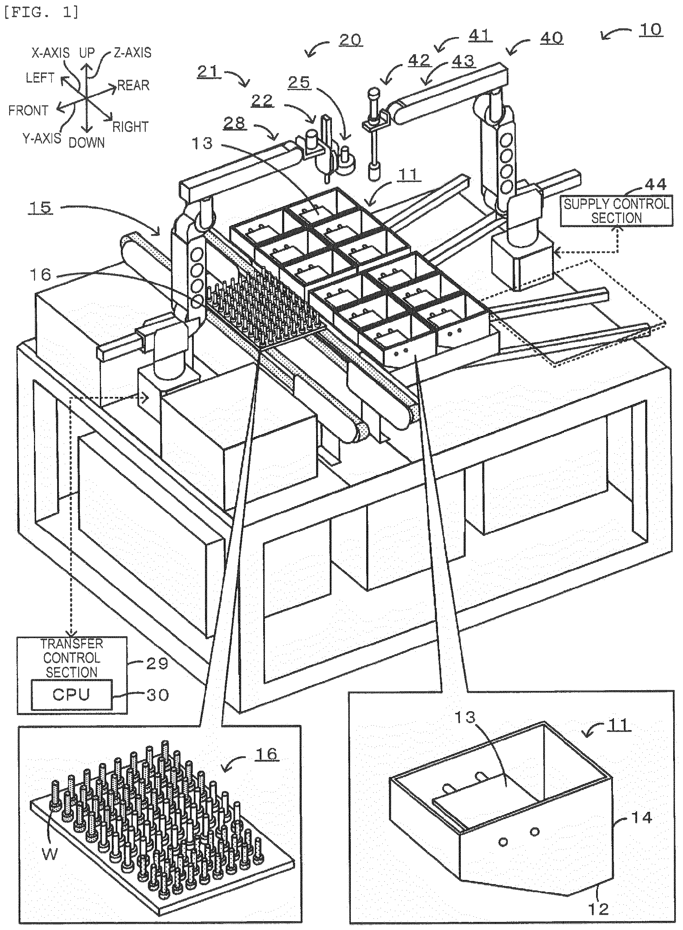

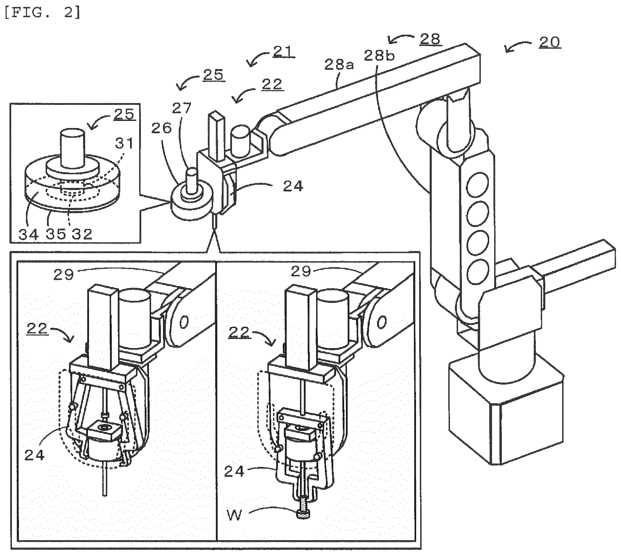

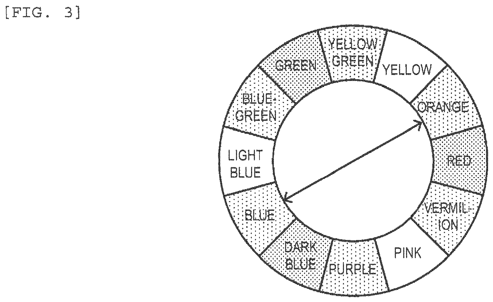

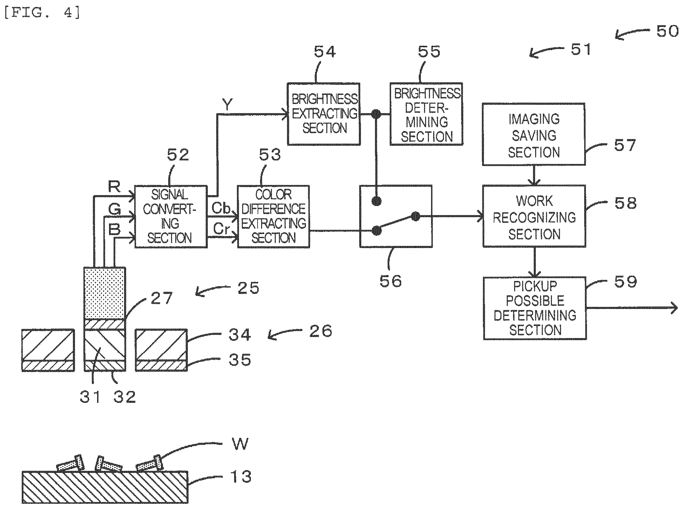

Embodiments of the present invention are described below with reference to the drawings. FIG. 1 is a schematic diagram of work transfer system 10 which is an example of the present invention. FIG. 2 is a schematic diagram of work transfer device 20 provided in work transfer system 10. FIG. 3 is a diagram showing complementary color relationships of pickup loading section 13 and the light radiated by light section 26. FIG. 4 is a schematic diagram of image processing device 50 provided in work transfer device 20. Work transfer system 10 is provided with work transfer device 20 and work supply device 40. In work transfer system 10, the left-right direction (X-axis), the front-rear direction (Y-axis), and the up-down direction (Z-axis) are described below as shown in FIG. 1.

Work transfer system 10 is configured as a device for moving and placing workpiece W, which is an operational target held by work holding member 11, to operation loading section 16 being used in a subsequent operation (see FIG. 1). For example, work transfer system 10 may load workpiece W, loaded on pickup loading section 13 of work holding member 11 in an unspecified orientation, onto operation loading section 16 in a predetermined orientation so that an operator can easily work on the workpiece after processing is completed. Here, an "unspecified orientation" refers to a state in which workpieces W are not unified in terms of position, direction, and the like. Workpiece W is not particularly limited, but includes, for example, mechanical parts, electrical parts, electronic parts, chemical parts, and the like, and may be, for example, one or more fastening members of bolts, nuts, washers, screws, nails, rivets, and the like. Workpiece W may be at least partially made of a magnetic material. Workpiece W may be an achromatic color including one or more of black, white, gray, and silver, for example. Work transfer system 10 includes conveyance section 15 which is a section for carrying in and carrying out operation loading section 16 and securing/removing workpiece W at the transfer position.

Work holding member 11 is a member for storing workpiece W. In work transfer system 10, multiple work holding members 11 are arranged, and a predetermined type of workpiece W is accommodated in each of work holding members 11. Work holding member 11 includes storage section 12 in which workpiece W is stored, pickup loading section 13 on which workpiece W supplied from storage section 12 is placed, and housing 14 constituting an outer wall of work holding member 11. Pickup loading section 13 is a plate-like member which is imaged in a state in which workpiece W is placed at the time of transfer processing of workpiece W, and is colored in a color complementary to the color of light irradiated at the time of imaging, as will be described later in more detail. Operation loading section 16 is a member for placing workpiece W in an array. Operation loading section 16 has a magnetic force, and is configured as a pallet that fixes workpiece W, which is magnetic, by a magnetic force. In operation loading section 16, workpiece W is disposed and fixed at a position determined in accordance with the type of workpiece W. The operator uses operation loading section 16 on which workpiece W is arranged and fixed, and assembles workpiece W and the like while specifying workpiece W based on the position on which workpiece W is arranged and fixed.

Work transfer device 20 includes transfer section 21 that picks up workpiece W from work holding member 11 on which one or more workpieces W are loaded, and moves and loads the picked up workpieces W on operation loading section 16 in a predetermined array. As shown in FIGS. 1 and 2, transfer section 21 includes pickup section 22, imaging section 25, light section 26, arm section 28, and transfer control section 29. Work transfer device 20 may execute a step for workpiece W, for example, a step of arranging bolts on workpiece W, a step of assembling a washer on the arranged bolts, or the like. Pickup section 22 is a member for picking up workpiece W, and is rotatably mounted on the tip of arm section 28, as shown in FIG. 2. Pickup section 22 is provided with gripping section 24 for holding and supporting workpiece W attracted by a magnetic force of a shaft member. In pickup section 22, workpiece W is clamped by two clamps of gripping section 24, but workpiece W may be clamped by three or more clamps. Arm section 28 has first arm 28a on which pickup section 22 is disposed, and second arm 28b which supports first arm 28a at one end and a seat is disposed at the other end. Arm section 28 is driven by multiple driving sections. Transfer control section 29 controls the entire device and includes CPU 30 and the like.

Imaging section 25 is a section for capturing an image and is fixed to the tip of pickup section 22 together with light section 26. Imaging section 25 is capable of capturing a color image and includes imaging element 27, lens 31, and polarization filter 32. Imaging element 27 is an element that receives light incident through polarization filter 32 and lens 31, and generates electric charges upon receiving light to output the generated electric charges. Imaging element 27 may be, for example, CMOS image sensor. Polarization filter 32 is adjusted so that its polarization plane is perpendicular to the polarization plane on the side of light section 26, thereby preventing halation and the like. Imaging section 25 generates image data based on the electric charges outputted from imaging element 27, and outputs the generated image data to transfer control section 29. Light section 26 includes ring lighting 34 and a polarization plate 35. Ring lighting 34 is vertical lighting that is circularly disposed on the outer circumference of imaging element 27 and irradiates light to an imaging target located below. Ring lighting 34, emits light from a white LED, the main component of the light source being blue (at a wavelength of around 450 nm). Light section 26 irradiates pickup loading section 13 with light having a color complementary to the color of pickup loading section 13. As shown in FIG. 3, it is assumed that pickup loading section 13 is colored in an orange color which is complementary to the predominantly blue color of the light source. Further, from the viewpoint of suppressing reflection of light, it is preferable that pickup loading section 13 be a matte surface. Light section 26 is disposed on pickup section 22 so as to irradiate light to the entire of pickup loading section 13, which is the imaging target. Here, it is assumed that pickup loading section 13 has a color (i.e., orange), and light (i.e., blue light) having a complementary color relationship is irradiated on pickup loading section 13. With this combination, the area can be determined with the same accuracy regardless of whether workpiece W is an achromatic color of black, white, gray, or silver. In consideration of the color of workpiece W, a suitable combination of colors having a complementary color relationship should be used to illuminate pickup loading section 13 and the light color of light section 26.

Work transfer device 20 is provided with image processing device 50. Image processing device 50 detects a region of workpiece W (i.e., a work region) on pickup loading section 13, and specifies workpiece W that is possibly picked up. As shown in FIG. 4, image processing device 50 includes imaging section 25, light section 26, and determining section 51. Determining section 51 detects the work region using the color difference signal among the brightness-color difference signals obtained from the signals outputted from imaging section 25, determines whether workpiece W of the work region can be picked up, and outputs the determination result. Determining section 51 includes signal converting section 52, color difference extracting section 53, brightness extracting section 54, brightness determining section 55, switching section 56, imaging saving section 57, work recognizing section 58, and pickup possible determining section 59. Signal converting section 52 converts the R, G, and B signals of the respective pixels outputted from imaging element 27 into YCbCr signals which are brightness-color difference signals through a predetermined arithmetic expression. For the brightness-color difference signals, YUV, YPbPr, or the like, for example, may be used. Color difference extracting section 53 receives color difference signals (i.e., Cb and Cr signals) from the signals converted by signal converting section 52, and detects a pixel corresponding to the work region by determining whether the pixel is at a signal level corresponding to workpiece W. Color difference extracting section 53 inputs a color difference signal in an offset binary format having values of 0 to 255 obtained by offsetting the positive and negative color difference levels, which are values of -128 to +127. In this color difference signal, the achromatic pixels, including black and white, are in the vicinity of the full-scale intermediate value (value 128) of the 8-bit input, and the colored pixels are at a sufficiently different level with respect to the value 128. Color difference extracting section 53 detects a region with a predetermined achromatic color level (e.g., (128-α) to (128+α), where α is an offset value) as a pixel of the work region. Although the sampling rate of the color difference signal may be lowered with respect to the brightness signal (e.g., 4:2:2 or 4:1:1), it is preferable that the color difference signal be handled at the same rate as the brightness signal in order to ensure positional accuracy.

Brightness extracting section 54 receives the brightness signal (i.e., the Y signal), converted by signal converting section 52, in parallel with color difference extracting section 53. When the value inputted to brightness extracting section 54 is a level of the color difference signal corresponding to workpiece W in color difference extracting section 53, brightness determining section 55 determines which of colors included in the achromatic color, for example, black, white (silver), or gray, the pixel has, according to the brightness level. The color of workpiece W can be specified by the determination result of brightness determining section 55. Switching section 56 switches the brightness signal and the color difference signal as the input to work recognizing section 58 in the subsequent stage. The reference image holding section 57 is a storage section that stores a reference image serving as a template of workpiece W. Imaging saving section 57 stores one or more reference images such as one obtained by viewing a pickup target workpiece W from one or more angles. Work recognizing section 58 detects a work region of the pickup target workpiece W by matching the reference image of the pickup target workpiece W with the aggregate region of pixels at the work region level detected by color difference extracting section 53. Pickup possible determining section 59 determines an pickup possible work region based on the proximity state and the overlapping states of two or more work regions. For example, when multiple workpieces W are close to each other or are overlapped with each other, gripping section 24 may fail to pick up the workpieces W. Here, it is determined that picking up is possible when the other work regions are apart from each other by more than a predetermined value. Pickup possible determining section 59 outputs the determination result of the pickup possible work region to transfer control section 29. Determining section 51 may perform each process with software, but it is preferable to perform each process with hardware (i.e., circuit configurations) in the interest of minimizing processing time.

Work supply device 40 picks up one or more workpieces W held in storage section 12 of work holding member 11 and is provided with supply section 41 for supplying workpiece W to pickup loading section 13 in an indefinite orientation so that workpiece W can be picked up by work transfer device 20 (see FIG. 1). Supply section 41 is provided with a pickup section 42 that picks up a large number of workpieces W at a time by a magnetic force, and arm section 48 similar to arm section 28. Work supply device 40 is provided with supply control section 44 for controlling the entire device.

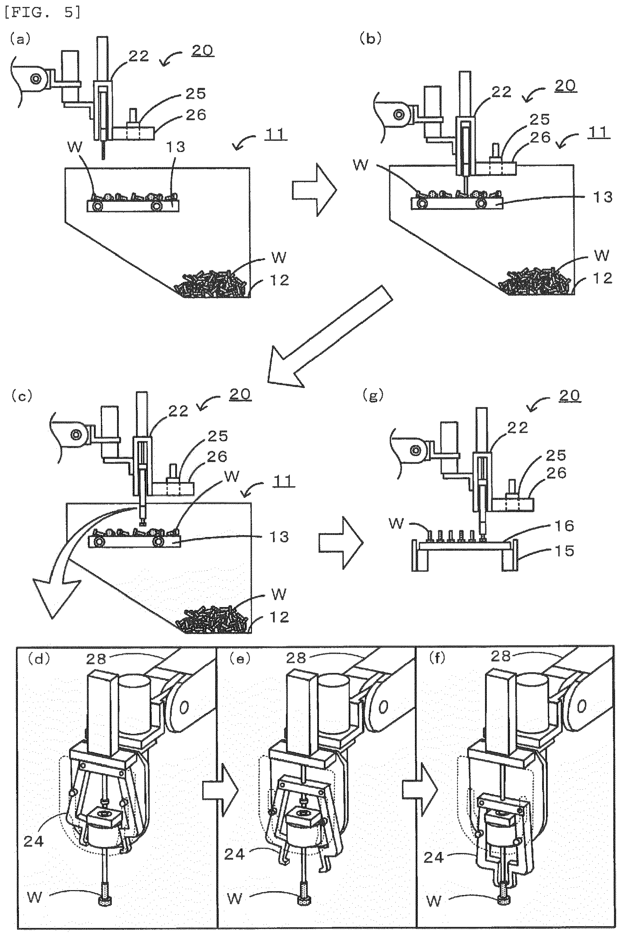

Next, the operation of work transfer system 10 of the present embodiment configured as described above will be described starting with the process of arranging and fixing workpiece W from pickup loading section 13 to operation loading section 16 FIG. 5 is a view of the work transfer process executed by work transfer device 20, in which FIG. 5(a) is a view for imaging the surface of pickup loading section 13, FIG. 5(b) is a view for picking up workpiece W, and FIG. 5(c) is a view in which workpiece W is fixed by gripping section 24. FIG. 5(d) is a view of workpiece W being drawn in, FIG. 5(e) is a view of gripping section 24 being moved, FIG. 5(f) is a view of workpiece W being fixed by gripping section 24, and FIG. 5(g) is a view of workpiece W being arranged and placed on operation loading section 16. First, in work transfer system 10, operation loading section 16 is conveyed by conveyance section 15, and operation loading section 16 is fixed at the transfer position. Next, the pickup section 42 of work supply device 40 picks up a large number of workpieces W accommodated in storage section 12 and drops them onto pickup loading section 13. The dropped workpieces W are dispersed and loaded in indefinite orientations on pickup loading section 13. Next, CPU 30 of work transfer device 20 moves imaging section 25 over pickup loading section 13 having workpiece W to be picked up, has light section 26 illuminate pickup loading section 13, and has imaging section 25 capture images (FIG. 5(a)). Image processing device 50 detects the position of workpiece W on pickup loading section 13, and outputs the position and orientation of workpiece W that can be picked up to transfer control section 29. CPU 30 moves pickup section 22 over workpiece W that can be picked up (FIG. 5(b)), and causes pickup section 22 to pick up workpiece W (FIG. 5(c) to (f)). CPU 30 arranges the picked up workpiece W at a predetermined position of operation loading section 16 (FIG. 5(g)). As described above, in work transfer system 10, various workpieces W are arranged on operation loading section 16.

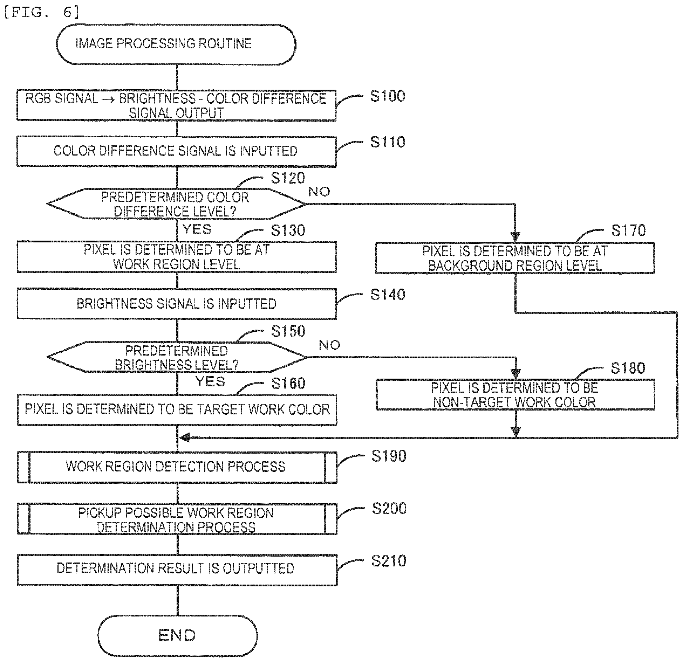

Next, the work region detection processing executed by image processing device 50 will be described. FIG. 6 is a flowchart showing an example of an image processing routine executed by determining section 51 of image processing device 50. This routine is executed by determining section 51 when a signal captured from imaging section 25 is inputted. First, when the RGB signals of the image taken by imaging section 25 are sequentially output from imaging element 27, signal converting section 52 converts the RGB signals into brightness-color difference signals (i.e., YCbCr signals) and outputs the brightness-color difference signals to color difference extracting section 53 and brightness extracting section 54 (S100). Color difference extracting section 53 receives the color difference signal (step S110) and determines whether or not the input signal level is a predetermined color difference level (achromatic color range) (step S120). Color difference extracting section 53 determines that the pixel is at the work region level when the input signal level is at the predetermined color difference level (step S130), and determines that the pixel is at the background region level when the input signal level is not at the predetermined color difference level (step S170). Next, brightness extracting section 54 inputs the brightness signal (step S140), and brightness determining section 55 determines whether the corresponding pixel is at a predetermined brightness level (step S150). The predetermined brightness level is set in accordance with, for example, one of the colors (e.g., white, silver, black, gray, etc.) of the pickup target workpiece W. When the corresponding pixel is at the predetermined brightness level, it is determined that the corresponding pixel is a target work color (step S160), and when the corresponding pixel is not at the predetermined brightness level, it is determined that the corresponding pixel is a non-target work color (step S180). Determining section 51 performs such processing on all the pixels.

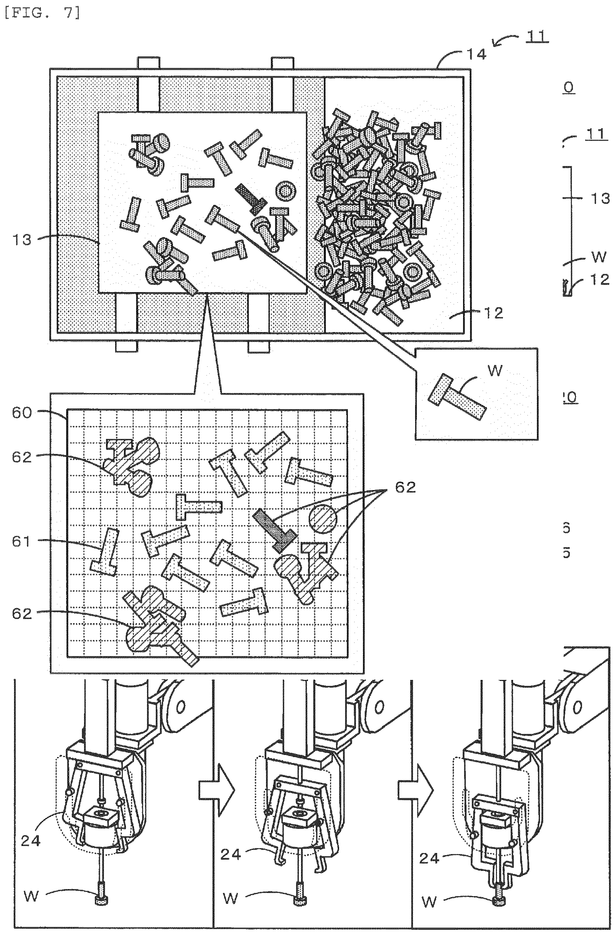

After steps S160, S170, and S180, work recognizing section 58 executes a work region detection process (step S190). Work recognizing section 58 detects a work region of the pickup target workpiece W by matching the reference image of the pickup target workpiece W, stored in imaging saving section 57, with the aggregate region of pixels at the work region level detected by color difference extracting section 53. When the work region is detected, pickup possible determining section 59 performs determination processing on the pickup possible work regions among the detected work regions (step S200), outputs the determination result to transfer control section 29 (step S210), and ends this routine. Pickup possible determining section 59 determines a pickup possible work region based on the proximity state of two or more work regions, the overlap state, and the placement position. Also, even when the color of a work region is a non-target work color different from the pickup target work region, pickup possible determining section 59 determines that the work region is not pickup possible. FIG. 7 is a view of pickup loading section 13 and the captured image 60. As shown in FIG. 7, determining section 51 recognizes, as pickup possible work region 61, a work region without overlapping or being close to another work region among the work regions that conform to the reference image of workpiece W of the captured image 60, and without being not at the edge of pickup loading section 13. On the other hand, determining section 51 recognizes, as a non-pickup possible work region 62, a work region overlapping with another work region, a work region adjacent to another work region, a work region with a color different from that of the pickup target work region, and a work region at the edge of pickup loading section 13. In this manner, image processing device 50 detects the position of workpiece W that can be more reliably picked up by pickup section 22.

Correspondences between constituent elements of the present embodiment and constituent elements of the invention will be clarified here.
Imaging section 25 of the present embodiment corresponds to an imaging section, light section 26 corresponds to a light section, determining section 51 corresponds to a determining section, and pickup loading section 13 corresponds to a pickup loading section. In the present embodiment, by describing the operation of image processing device 50, an example of the image processing method of the present invention is made clear.

Image processing device 50 of the present embodiment described above is a device used in a work transfer device that picks up and moves workpiece W from pickup loading section 13 on which one or more workpieces W are loaded by pickup section 22. Image processing device 50 includes light section 26 for irradiating light on pickup loading section 13, imaging section 25 capable of capturing a color image of pickup loading section 13, and determining section 51 for detecting a work region using a color difference signal among brightness-color difference signals obtained from signals outputted from imaging section 25, determining whether a work in the work region can be picked up, and outputting the determination result. Image processing device 50 detects a work region mainly by using a color difference signal among brightness-color difference signals obtained from signals outputted from imaging section 25 that captures a color image, determines whether a work in the detected work region can be picked up, and outputs a determination result.

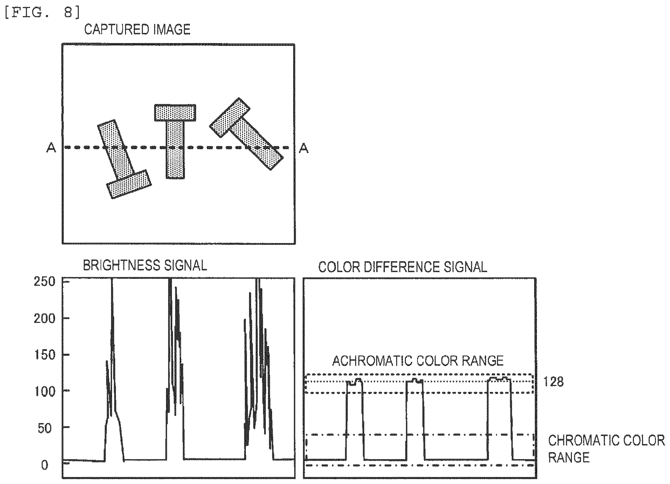

FIG. 8 shows an example of a captured image of workpiece W having metal gloss, and brightness signals and color difference signals along AA of the captured image. Since the overall output of the brightness signal is large, there is an advantage in that the threshold value can be easily set, however, as shown in FIG. 8, halation occurs in workpiece W having a metallic luster, or it is difficult to illuminate the side of workpiece W having a curved surface since contrast of the side surface may be weakened. Also, in the brightness signal, the brightness level becomes unstable at the uneven portion of the workpiece surface (e.g., the threaded portion of the bolt), and image processing device 50 may erroneously detect the contour shape (edge portion) of the workpiece so that the workpiece may not be accurately detected in some cases. This can be solved if workpiece W is illuminated from the side, but there is an equipment problem for illumination being arranged for each pickup loading section 13, and pickup section 22 may have difficulty in picking up workpiece W if such an illumination is disposed at the side. Further, in the case of detecting the work region using the brightness signal, if the color of workpiece W is white or black, the contrast difference may not be obtained unless the background color is changed in accordance with the color of workpiece W. On the other hand, in the case of detecting the work region using the color difference signal, if workpiece W of the achromatic color is placed on a color background, the work region becomes a fixed value (approximate value 128), the contour extraction of the side surface of the metal workpiece W can be reliably performed, and changing the background color is not required. As described above, in image processing device 50, since the work region is detected using the color difference signal, by properly selecting the background color, the color difference level between the background (i.e., pickup loading section 13) and workpiece W becomes more stable, and the contour extraction becomes more stable. In this device, for example, robustness against background noise and lighting brightness fluctuations can be enhanced, and the position of workpiece W can be determined more reliably by using inexpensive and general-purpose equipment. Then, in work transfer device 20 that has obtained a determination result, workpiece W can be more reliably picked up based on the position of workpiece W that has been more reliably obtained.

Further, in image processing device 50, pickup loading section 13 is colored in a predetermined manner, and light section 26 irradiates pickup loading section 13 with light having a complementary coloring relationship to the color of pickup loading section 13. In this device, since the influence of shadows of workpiece W or the like can be further suppressed by light of a complementary color, the position of workpiece W can be determined more reliably. In image processing device 50, it is preferable that the color of workpiece W may be achromatic, and that of pickup loading section 13 may be orange, while light section 26 irradiates blue light. Further, in image processing device 50, workpiece W is an achromatic color including one or more of black, white, gray, and silver, and determining section 51 determines whether the work region is a color included in the achromatic color by using the brightness signal. In the color difference signal, since the color difference level becomes a fixed value (e.g., value 128) in the achromatic color region, the position of workpiece W can be determined more reliably in this device. Further, in this device, since it is possible to determine which achromatic color the region is based on the brightness signal, it is possible to more reliably determine the pickup target work region.

Determining section 51 detects a work region by matching a reference image of the pickup target workpiece W with a pixel region corresponding to the work region, and determines a work region that can be picked up based on the proximity state or the overlap state of two or more work regions, the color of the work region, the location of workpiece W, and the like. In this device, the work region can be detected using the reference image. Further, in this device, it is possible to determine a work region that can be picked up using the state of the work region. Further, in work transfer device 20, light section 26 and imaging section 25 are disposed in transfer section 21. In this device, since an image can be captured at a position closer to workpiece W, the positional coordinates of workpiece W can be detected more accurately.

Meanwhile, it goes without saying that the invention is not limited to the above-mentioned embodiment and various embodiments may be applied within the technical scope of the invention which is defined by the appended claims.

In this device, since the work region is detected using the color difference level, the position of workpiece W can be determined more reliably while maintaining versatility.

In the embodiment described above, workpiece W is an achromatic color including one or more of black, white, gray, and silver, and determining section 51 determines whether the work region is a color included among the achromatic colors by using the brightness signal, but the process of specifying the achromatic color by the brightness signal may be omitted. This process can be omitted if workpiece W held in work holding member 11 does not enter anything other than a predetermined work holding member 11.

In the embodiment described above, determining section 51 detects a region at a predetermined achromatic color level as the work region, but the present invention is not limited to this, and a region other than a region at a predetermined coloring level (e.g., 90 or less) may be detected as the work region (see the color difference signal graph in FIG. 8). In this case, in the image processing routine described above, the color difference level in step S120 is set to the level of the background color, and in step S130, the pixel in question is specified as the background area, and the complementary region is determined as the work region by using an inverted signal or the like.

In the above-described embodiment, light section 26 and imaging section 25 are disposed in transfer section 21, but are not limited thereto, and may be disposed above pickup loading section 13, or may be disposed in transfer section 21 and above pickup loading section 13. In the device in which the light section 26 and imaging section 25 are disposed above pickup loading section 13, it is preferable that the processing time may be further shortened since image processing device 50 captures an image of workpiece W from above pickup loading section 13 and detect the work region while transfer section 21 moves workpiece W.

In the above-described embodiment, pickup section 22 is magnetically pulled and gripped by gripping section 24 to pick up workpiece W. However, workpiece W may be picked up by magnetic force only, workpiece W may be gripped by only gripping section 24, or workpiece W may be sucked by an suction nozzle.

In the embodiment described above, the pickup target workpiece W is mounted on pickup loading section 13 disposed on work holding member 11, but the present invention is not particularly limited thereto. For example, the pickup target workpiece W may be placed on a moving belt conveyor. In this device, the belt conveyor corresponds to the pickup loading section, and the color of the belt conveyor is colored or the like. Also in this device, since the work region is detected using the color difference level, the position of workpiece W can be determined more reliably while maintaining versatility. When the pickup loading section is a belt conveyor, multiple types of workpieces W may be placed on the belt conveyor, and the pickup target workpiece W may be specified by recognition of the work region with image processing device 50. It should be noted that multiple types of workpieces W may also be mounted on pickup loading section 13 disposed on work holding member 11, and the pickup target workpiece W may be specified by recognition of the work region with image processing device 50.

In the embodiment described above, workpiece W is assumed to be an achromatic color, but it may be assumed that workpiece W is not an achromatic color. In the device for handling workpiece W, the color of pickup loading section 13 and the color of light section 26 may be set to a color suitable for workpiece W. For example, workpiece W may be colored, and pickup loading section 13 may be an achromatic color.

In the embodiment described above, image processing device 50 executes the image processing routine, but the present invention is not particularly limited thereto, and may be executed by transfer control section 29.

In the embodiment described above, work transfer system 10 includes one work transfer device 20 and one work supply device 40, but the present invention is not particularly limited thereto, and one or more of each device may be provided.

In the embodiment described above, the present invention is applied to a work transfer device for picking up and moving a workpiece by a pickup section, but may be applied to recognition of a mark of a component or a circuit board in an electronic component circuit assembling machine, and recognition of a cutting tool or a workpiece in a machine tool.

Although the above-described embodiment has been described as work transfer system 10 that includes work transfer device 20 and work supply device 40, it may be work transfer device 20 alone, may be image processing device 50 alone, or may be provided as an image processing method. In this image processing method, various aspects of image processing device 50 described above may be adopted, or steps for realizing the functions of image processing device 50 described above may be added.

### Industrial Applicability

The present invention can be applied to the technical field of a device for performing processing such as picking up and arranging a workpiece.

### Reference Signs List

10: work transfer system; 11: work holding member; 12: storage section; 13: pickup loading section; 14: housing; 15: conveyance section; 16: operation loading section; 20: work transfer device; 21: transfer section; 22: pickup section; 24: gripping section; 25: imaging section; 26: light section; 27: imaging element; 28: arm section; 28a: first arm; 28b: second arm; 29: transfer control section; 30 CPU; 31: lens; 32: polarization filter; 34: ring lighting; 35: polarization plate; 40: work supply device; 41: supply section; 42: pickup section; 43: arm section; 44: supply control section; 50: imaging processing device; 51: determining section; 52: signal converting section; 53: color difference extracting section; 54: brightness extracting section; 55: brightness determining section; 56: switching section; 57: imaging saving section; 58: work recognizing section; 59: pickup possible determining section; 60: captured image; 61: pickup possible work region; 62: pickup not possible work region; W: workpiece

## Claims

1. An image processing device (50) used by a work transfer device (20) configured to use a pickup section (22) to pick up a workpiece (W) from a pickup loading section (13) on which at least one of the workpieces (W) is loaded, the image processing device (50) comprising:
A lighting section (26) configured to emit light to the pickup loading section (13); and
An imaging section (25) configured to capture a color image of the pickup loading section (13);
a determining section (51) configured to detect a work region corresponding to the workpiece using a color difference signal from
among a brightness-color difference signal obtained from a signal output by the imaging section (25),
the image processing device being **characterized by**
the determining section is configured to determine whether the workpiece (W) of the work region can be picked up, and to output a determining result, and the pickup loading section (13) is a specified color, and the lighting section (26) is configured to emit a light with a complementary color to the specified color of the pickup loading section (13).

2. The image processing device (50) according to claim 1, wherein
the workpiece (W) is an achromatic color including at least one of black, white, grey, or silver, and the determining section (51) determines which color the work region is out of the achromatic colors using the brightness signal.

3. The image processing device (50) according to claim 1 or 2, wherein
the determining section (51) adapted to detect a region with a specified achromatic color level as the work region, or to detect a region except for a region with a specified color level as the work region.

4. The image processing device (50) according to any one of the claims 1 to 3, wherein
the determining section (51) is adapted to detect a pickup target work region based on matching a reference image of a pickup target workpiece (W) and the work region, and to determine a pickup possible work region based on a state in which at least two of the work regions are adjacent and overlapping.

5. A work transfer device (20) comprising:
an image processing device (50) according to any one of the claims 1 to 4;
a transfer section (21) at which a pickup section (22) that is configured to pick up a workpiece (W) is arranged and that is configured to transfer the pickup section (22); and
a control section (29) configured to control the transfer section (21) based on the determination result output by the determining section (51) of the image processing device (50).

6. The work transfer device (20) according to claim 5, wherein
the lighting section (26) and the imaging section (25) are arranged at least one of on the transfer section (21), or above the pickup loading section (13).

7. An image processing method used by a work transfer device (20) configured to use a pickup section (22) to pick up a workpiece (W) from a pickup loading section (13) on which at least one of the workpieces (W) is loaded, the image processing method comprising:
(a) emitting light to the pickup loading section (13) and using an imaging section (25) to capture a color image of the pickup loading section (13), and
(b) detecting a work region corresponding to the workpiece using a color difference signal from among a brightness-color difference signal obtained from a signal output by the imaging section (25),
the method being **characterized by**
the pickup loading section is a specified color;
the light emitted to the pickup loading section has complementary color to the specified color of the pickup loading section (13); and by further comprising determining whether the workpiece (W) of the work region can be picked up, and outputting a determining result.

## Patentansprüche

1. Bildverarbeitungsvorrichtung (50), die von einer Werkstück-Überführungsvorrichtung (20) verwendet wird, die so ausgeführt ist, dass sie einen Aufnahmeabschnitt (22) verwendet, um ein Werkstück (W) von einem Aufnahme-Ablageabschnitt (13) aufzunehmen, auf den wenigstens eines der Werkstücke (W) abgelegt wird, wobei die Bildverarbeitungsvorrichtung (50) umfasst:
einen Beleuchtungsabschnitt (26), der so ausgeführt ist, dass er Licht auf den Aufnahme-Ablageabschnitt (13) emittiert; und
einen Bilderzeugungsabschnitt (25), der so ausgeführt ist, dass er ein Farbbild des Aufnahme-Ablageabschnitts (13) aufnimmt;
einen Feststellungsabschnitt (51), der so ausgeführt ist, dass er einen dem Werkstück entsprechenden Bearbeitungsbereich unter Verwendung eines Farbdifferenzsignals aus einem Helligkeits-Farbdifferenzsignal erfasst, das aus einem von dem Bilderzeugungsabschnitt (25) ausgegebenen Signal gewonnen wird,
wobei die Bildverarbeitungsvorrichtung **dadurch gekennzeichnet ist, dass**
der Feststellungsabschnitt so ausgeführt ist, dass er feststellt, ob das Werkstück (W) des Bearbeitungsbereiches aufgenommen werden kann, und ein Feststellungsergebnis ausgibt,
und der Aufnahme-Ablageabschnitt (13) eine vorgegebene Farbe hat und der Beleuchtungsabschnitt (26) so ausgeführt ist, dass er ein Licht mit einer zu der vorgegebenen Farbe des Aufnahme-Ablageabschnitts (13) komplementären Farbe emittiert.

2. Bildverarbeitungsvorrichtung (50) nach Anspruch 1, wobei
das Werkstück (W) eine achromatische Farbe hat, die Schwarz, Weiß, Grau oder/und Silber einschließt, und
der Feststellungsabschnitt (51) anhand des Helligkeitssignals feststellt, welche Farbe von den achromatischen Farben der Bearbeitungsbereich hat.

3. Bildverarbeitungsvorrichtung (50) nach Anspruch 1 oder 2, wobei
der Feststellungsabschnitt (51) so eingerichtet ist, dass er einen Bereich mit einem vorgegebenen achromatischen Farbpegel als den Bearbeitungsbereich erfasst oder einen Bereich mit Ausnahme eines Bereiches mit einem vorgegebenen Farbpegel als den Bearbeitungsbereich erfasst.

4. Bildverarbeitungsvorrichtung (50) nach einem der Ansprüche 1 bis 3, wobei
der Feststellungsabschnitt (51) so eingerichtet ist, dass er auf Basis von Abgleichen eines Bezugs-Bildes eines Aufnahmeobjekt-Werkstücks (W) und des Bearbeitungsbereiches einen Aufnahmeobjekt-Bearbeitungsbereich erfasst und auf Basis eines Zustandes, in dem wenigstens zwei der Bearbeitungsbereiche aneinandergrenzen und einander überlappen, einen Bearbeitungsbereich bestimmt, in dem Aufnahme möglich ist.

5. Werkstück-Überführungsvorrichtung (20), die umfasst:
eine Bildverarbeitungsvorrichtung (50) nach einem der Ansprüche 1 bis 4,
einen Überführungsabschnitt (21), an dem ein Aufnahmeabschnitt (22) angeordnet ist, der so ausgeführt ist, dass er ein Werkstück (W) aufnimmt, und der so ausgeführt ist, dass er den Aufnahmeabschnitt (22) überführt; sowie
einen Steuerungsabschnitt (29), der so ausgeführt ist, dass er den Überführungsabschnitt (21) auf Basis des von dem Feststellungsabschnitt (51) der Bildverarbeitungsvorrichtung (50) ausgegebenen Feststellungsergebnisses steuert.

6. Werkstück-Überführungsvorrichtung (20) nach Anspruch 5, wobei
der Beleuchtungsabschnitt (26) und der Bilderzeugungsabschnitt (25) an dem Überführungsabschnitt (21) oder/und über dem Aufnahme-Ablageabschnitt (13) angeordnet sind.

7. Bildverarbeitungsverfahren, das von einer Werkstück-Überführungsvorrichtung (20) verwendet wird, die so ausgeführt ist, dass sie einen Aufnahmeabschnitt (22) verwendet, um ein Werkstück (W) von einem Aufnahme-Ablageabschnitt (13) aufzunehmen, auf den wenigstens eines der Werkstücke (W) abgelegt wird, wobei das Bildverarbeitungsverfahren umfasst:
(a) Emittieren von Licht auf den Aufnahme-Ablageabschnitt (13) und Verwenden eines Bilderzeugungsabschnitts (25), um ein Farbbild des Aufnahme-Ablageabschnitts (13) aufzunehmen, sowie
(b) Erfassen eines dem Werkstück entsprechenden Bearbeitungsbereiches unter Verwendung eines Farbdifferenzsignals aus einem Helligkeits-Farbdifferenzsignal, das aus einem von dem Bilderzeugungsabschnitt (25) ausgegebenen Signal gewonnen wird, wobei das Verfahren **dadurch gekennzeichnet ist, dass**
der Aufnahme-Ablageabschnitt eine vorgegebene Farbe hat;
das auf den Aufnahme-Ablageabschnitt (13) emittierte Licht eine zu der vorgegebenen Farbe des Aufnahme-Ablageabschnitts (13) komplementäre Farbe hat, und dadurch, dass es des Weiteren umfasst:
Feststellen, ob das Werkstück (W) des Bearbeitungsbereiches aufgenommen werden kann, und Ausgeben eines Feststellungsergebnisses.

## Revendications

1. Dispositif de traitement d'image (50) utilisé par un dispositif de transfert de travail (20) configuré pour utiliser une section de prélèvement (22) pour prélever une pièce à usiner (W) à partir d'une section de chargement par prélèvement (13) sur laquelle au moins une des pièces à usiner (W) est chargée, le dispositif de traitement d'image (50) comprenant :
une section d'éclairage (26) configurée pour émettre de la lumière vers la section de chargement par prélèvement (13) ; et
une section d'imagerie (25) configurée pour capturer une image en couleur de la section de chargement par prélèvement (13) ;
une section de détermination (51) configurée pour détecter une région de travail correspondant à la pièce à usiner utilisant un signal de différence de couleur parmi un signal de différence de luminosité-couleur obtenu à partir d'un signal délivré en sortie par la section d'imagerie (25),
le dispositif de traitement d'image étant **caractérisé en ce que** la section de détermination est configurée pour déterminer si la pièce à usiner (W) de la région de travail peut être prélevée, et délivrer en sortie un résultat de détermination, et
la section de chargement par prélèvement (13) est d'une couleur spécifiée, et la section d'éclairage (26) est configurée pour émettre une lumière avec une couleur complémentaire à la couleur spécifiée de la section de chargement par prélèvement (13).

2. Dispositif de traitement d'image (50) selon la revendication 1, dans lequel
la pièce à usiner (W) est d'une couleur achromatique comprenant au moins l'un parmi du noir, blanc, gris, ou argent, et
la section de détermination (51) détermine quelle couleur de la région de travail est en dehors des couleurs achromatiques en utilisant le signal de luminosité.

3. Dispositif de traitement d'image (50) selon la revendication 1 ou 2, dans lequel la section de détermination (51) est adaptée pour détecter une région ayant un niveau de couleur achromatique spécifié comme la région de travail, ou pour détecter une région à l'exception d'une région ayant un niveau de couleur spécifié comme la région de travail.

4. Dispositif de traitement d'image (50) selon l'une quelconque des revendications 1 à 3, dans lequel
la section de détermination (51) est adaptée pour détecter une région de travail cible par prélèvement basée sur une correspondance entre une image de référence d'une pièce à usiner cible par prélèvement (W) et la région de travail, et pour déterminer une région de travail possible par prélèvement basée sur un état dans lequel au moins deux des régions de travail sont adjacentes et se chevauchent.

5. Dispositif de transfert de travail (20) comprenant :
un dispositif de traitement d'image (50) selon l'une quelconque des revendications 1 à 4;
une section de transfert (21) au niveau de laquelle une section de prélèvement (22) qui est configurée pour prélever une pièce à usiner (W) est agencée et qui est configurée pour transférer la section de prélèvement (22) ; et
une section de commande (29) configurée pour commander la section de transfert (21) sur la base du résultat de détermination délivré en sortie par la section de détermination (51) du dispositif de traitement d'image (50).

6. Dispositif de transfert de travail (20) selon la revendication 5, dans lequel la section d'éclairage (26) et la section d'imagerie (25) sont disposées au niveau d'au moins un emplacement situé sur la section de transfert (21), ou au-dessus de la section de chargement par prélèvement (13).

7. Procédé de traitement d'image utilisé par un dispositif de transfert de travail (20) configuré pour utiliser une section de prélèvement (22) pour prélever une pièce à usiner (W) à partir d'une section de chargement par prélèvement (13) sur laquelle au moins une des pièces à usiner (W) est chargée, le procédé de traitement d'image comprenant les étapes consistant à :
(a) émettre de la lumière vers la section de chargement par prélèvement (13) et utiliser une section d'imagerie (25) pour capturer une image en couleur de la section de chargement par prélèvement (13), et
(b) détecter une région de travail correspondant à la pièce à usiner en utilisant un signal de différence de couleur parmi un signal de différence de luminosité-couleur obtenu à partir d'un signal délivré en sortie par la section d'imagerie (25), le procédé étant **caractérisé en ce que**
la section de chargement par prélèvement est d'une couleur spécifiée ;
la lumière émise vers la section de chargement par prélèvement a une couleur complémentaire à la couleur spécifiée de la section de chargement par prélèvement (13) ; et **en ce qu'**il comprend en outre de déterminer si la pièce à usiner (W) de la région de travail peut être prélevée, et de délivrer en sortie un résultat de détermination.
